# EUROPEAN PATENT APPLICATION

(11) **EP 1 206 111 A1**
(43) Date of publication of application: **15.05.2002**
(21) Application number: 00403154.8
(22) Date of filing: 13.11.2000
(51) Int. Cl.: H04M 17/00, H04Q 3/00

(54) **Charging arrangement for a multimedia communication system**

(71) Applicant: ALCATEL, 75008 Paris (FR)
(72) Inventor: Bos, Lieve Maria Marcella Rosemarijn, 2340 Vlimmeren (BE); Thiebaut, Laurent, 92160 Antony (FR)
(74) Representative: Narmon, Gisèle Marie Thérèse

(57) **Abstract**

A charging arrangement and corresponding method for use in a multimedia communication system including a bearer level network system (15) with at least a service switching point (16) and a service platform (14) with at least a service control point (12). The method comprises a step of transferring information, between the service control point (12) and the service switching point (16) according to a standardized bearer network interface (CAP), and particularly charging information related to a transfer of data in relation with a service provided to a user. The method further comprises the steps of receiving type information by the bearer level system (15) from a proxy call state control function device (17) related to the service; and translating the type information towards the service switching point (16) for transfer to the service control point (12) according to the standardized bearer network interface (CAP); and requesting and receiving the type information by the service control point (12), from the service switching point (16) according to the standardized bearer network interface (CAP).

## Description

The present invention relates to a charging arrangement, as described in the preamble of claim 1, for a multimedia communication system, such as a universal mobile telecommunication system and for instance a system referred to as UMTS R2000. It also relates to a service switching point and a service control point of a multimedia communication system, according to, respectively, the preamble of claim 4 and to the preamble of claim 5, that are included in such an arrangement. It also relates to a bearer level system according to the preamble of claim 6 and to a charging method according to the preamble of claim 7 for being executed by such a charging arrangement.

As known, one of the main innovations brought by the new universal multimedia architecture for Internet protocol multimedia system, as recently defined, is the split between bearer control and call control. Bearer control comprises generic packet radio system (GPRS) elements, such as Serving GPRS Support Node (SGSN) and Gateway GPRS Support Node (GGSN) and call control comprises Session Initiation Protocol (SIP) call control element, more specifically call state control function (CSCF). Charging and more specifically on-line charging implies interaction between service platform and, on the one hand, GPRS bearer level, for instance for prepaid charging on an amount of data packets to transfer, and call control level, for instance for prepaid charging on the type of call, such as national or international call, or to a multimedia domain by means of a public switched telephone network or of an Internet protocol (IP) network.

Right now, the GPRS level uses for on-line charging a specific protocol to interface with the service platform of an on-line charging node. This specific protocol is referred to as CAP with C for customised applications for mobile network enhanced logic (CAMEL) and (AP) for application part, the charging node comprising a CAMEL service environment (CSE) platform.

Universal mobile telecommunication system UMTS uses the same means as GPRS and the CAP protocol at an interface level, as does GPRS, between bearer control and service platform, i. e. platform CSE. As known an UMTS service switching point (SSP) triggers a service control point (SCP), in relation with the number of transferred IP packets or in relation with the transferring time of the transferred IP packets.

A straightforward solution for enabling the second level of interaction, as stated above, between a service platform CSE and a function, such as a proxy-call state control function (P-CSCF) is obtainable by means of a new on-line charging protocol, for instance an extension of protocol CAP.

This would imply a standardization of two separate interfaces to the service platform CSE in order to support on-line charging.

An object of this invention, therefore, is to provide a charging arrangement for a multimedia communication system, avoiding such a drawback of having to standardize a second on-line charging interface in supplement of the already standardized CAP interface.

This object is obtained with the charging arrangement of claim 1that comprises the service switching point of claim 4 and the service control point of claim 5 and the bearer level system of claim 6 which are executing the charging method of claim 7.

The multimedia communication system includes a bearer level system with at least a service switching point and a service platform with at least a service control point and means for transferring information between a service control point and a service switching point according to a standardized bearer network interface CAP, and particularly charging information related to a transfer of data in relation with a service provided to a user. According to the invention, the charging arrangement implies that:
- the bearer level system comprises means for receiving type information that is related to the service from a proxy call state control function device and means for translating the type information towards the service switching point for transfer to said service control point according to the standardized bearer network interface (CAP); and that
- the service control point comprises means for receiving the type information, from the service switching point according to the standardized bearer network interface (CAP).

These and other objects, advantages and features of the invention will become apparent from the following description thereof taken in conjunction with the accompanying drawings defined here below.

Figure 1 is an outline of a universal mobile telecommunication system with a charging arrangement according to the invention.

Figure 2 shows a charging arrangement for a universal mobile telecommunication system as in figure 1.

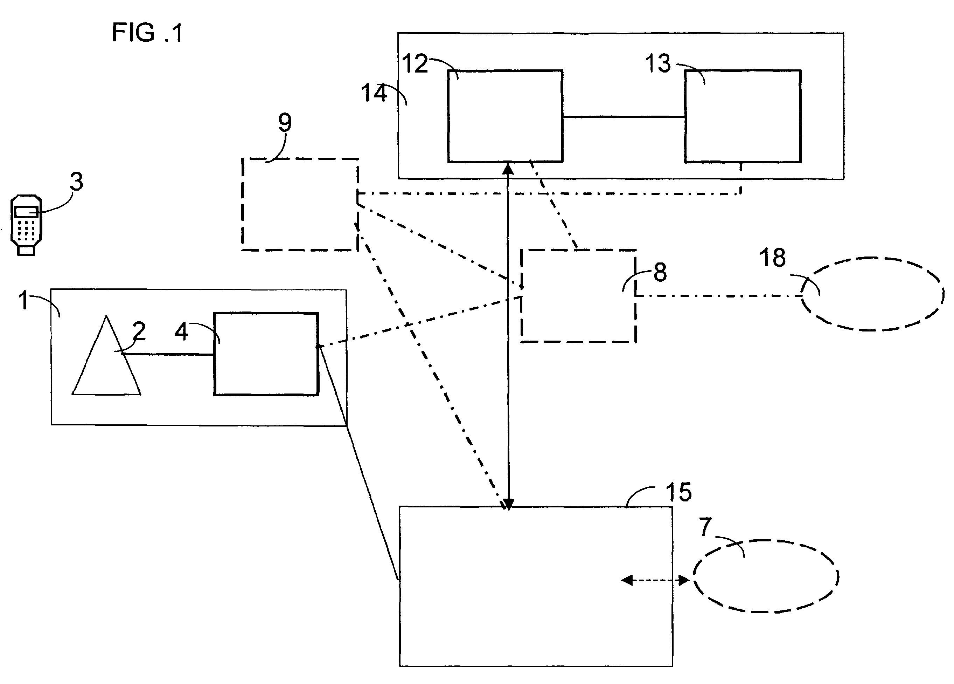

On figure 1, the elements and links relating to the charging arrangement are in full lines and the other elements and links of the architecture are in dashed or dot-and-dash lines.

The architecture of a multimedia communication system and more specifically of an universal mobile telecommunication system UMTS is outlined on the accompanying figure 1, it is drawn from the known architectures of the global system communication GSM and of the generic packet radio system GPRS.

However, as pointed out above, a dissociation is foreseen between call control and bearer control, with a possibility of having an information transport network, which is not illustrated on figure 1, such as an asynchronous time multiplex (ATM) network, an IP network and/or another high rate transmission network, between sub-systems and units related to different domains, such as services domain, circuit switched domain, IP multimedia domain, in the multimedia communication system.

As known, in a multimedia communication system, as foreseen, an access network and for instance an UMTS terrestrial access network (UTRAN) includes a sub-system 1 broadly similar to the GSM base station sub-system. Such a subs-system comprises intelligent transceiver units, such as unit 2, also called nodes B which correspond to the GSM base transceivers stations (BTS), for radio-communications with subscriber mobiles, such as mobile 3. Radio network controllers (RNC), such as radio network controller 4, control the radio links established with the mobiles in the network. They broadly correspond to GSM base station controllers, but as code division multiple access CDMA is substituted in UMTS to the time division multiple access used in GSM, several lines are possibly active at a same time between a node 2 and a mobile 3 and a same node is possibly controlled by several interconnected radio network controllers 4. The radio network controllers are connected in an asynchronous transfer mode (ATM) to the core network which corresponds broadly to GSM/GPRS core networks and which are for instance divided in domains, with a service domain 14, a packet switched domain 15, an Internet protocol IP domain 7, and a circuit switched domain 18.

As already known, radio network controllers are linked to mobile service switching centers (MSC), such as mobile service switching center 8. In the earlier UMTS version, such a center 8 is associated with a visitor location register (VLR) and comprises a switching network for establishing transport connections. In later switching networks now, the transport network is dissociated from the call control means.

Such a mobile service switching center 8 is linked to a circuit switched network 18 such as a public switched telephone network (PSTN) and/or an integrated services digital network, at least for call control and also for interconnection purposes in the earlier UMTS version. It is also linked with a home location register (HLR) or a home subscriber server (HSS), such as unit 9. As known, a home subscriber server HSS stores user's IP multimedia service profile data in addition to the user's service profile data for circuit or packet switched services stored in a home location register (HLR).

As indicated above, radio network controllers 4 are linked to units of the packet switched domain such as the bearer level system 15, particularly for providing packet switched connectivity services to Internet users.

Such bearer level system 15 comprises serving GPRS support node (SGSN) and gateway GPRS support node (GGSN).

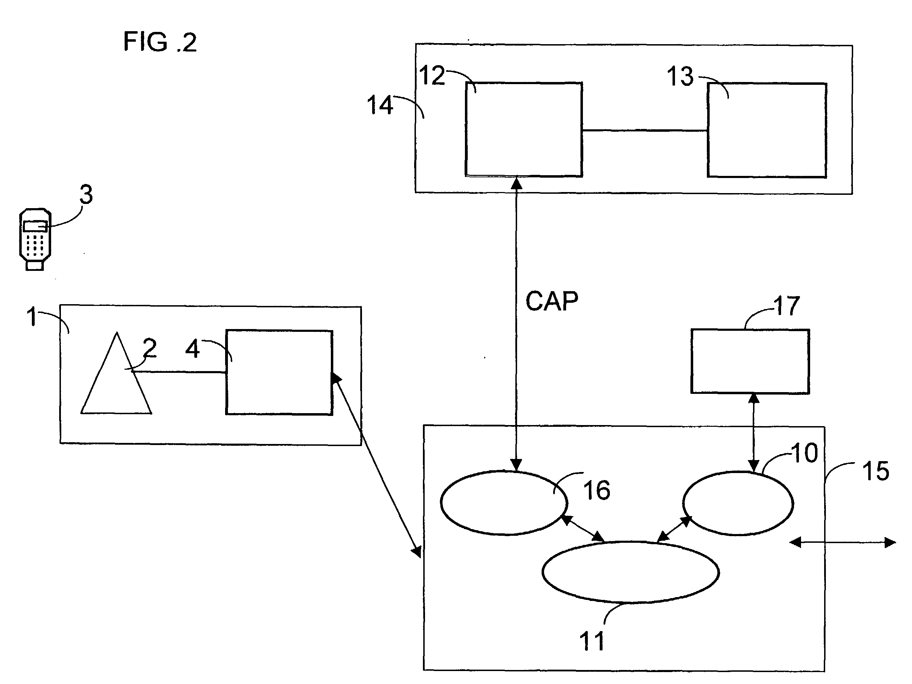

It has to be remarked that these nodes are not shown in Figure 1 and Figure 2, since the exact location of the functional elements according to the present invention regarding these nodes goes beyond the aim of the invention. The fact is that the SGSN and GGSN node might comprise one or more functional blocks of the present invention but that these functional blocks, according to the present invention are not necessarily comprised in a SGSN and/or GGSN. This will become more clearly in a later paragraph.

SGSN units and GGSN units are linked in the packet switched domain and GGSN units are linked to sub-systems in the Internet domain 7, for instance, at the level of a call state control function (CSCF) and of a media gateway controller, not shown on the figure.

Each SGSN unit is also linked to radio network controllers, and to at least a home subscriber server HSS 9. There are links between SGSN units (comprised in a bearer level system 15) and service control points (SCP), such as service control point 12, of the service domain i.e. the service platform CSE 14. Such a service domain includes, among others, at least an application server 13 and a service control point 12.

As indicated above, services are provided via customized applications for network enhanced logic CAMEL and more specifically via a CAMEL interface to MSC unit 8 or via a open service architecture (OSA) which defines an open application protocol interface for the implementation, control and execution of services and applications provided by "third" service providers. Such an OSA interface is applicable between an application and a service capability server (SCS) and for instance between application server 13 and HSS unit 9, as well as between application server 13 and the CAMEL service environment 14 (CSE), i.e. the service platform including service control point 12.

As already indicated, service platform 14 uses CAP protocol at an interface level with bearer network elements, such as SGSN units and GGSN units. This means that at least between the service control point 12 and the service switching point 16 as shown on figure 2 are interfacing via this CAP protocol i.e. this standardized bearer network interface.

The CAP interface between the service platform 14 and the bearer level system 15 is reused for on-line charging control upon as well the bearer level as the call control level.

As illustrated on figure 2, in the charging arrangement according to the invention, which, is provided, as in non limiting example, in a GPRS environment, a service platform CSE, such as 14, is shown with a service control point 12 linked to an application server 13, in the conditions indicated in relation with figure 1.

In the above mentioned GPRS environment, a GPRS profile is defined for every GPRS user and a GPRS account can be associated to every GPRS prepaying user, such a user having access to information contained in his account and being able to consult, fill and spend this account. A GPRS prepaid service provides a credit control function for every user and can notify such a user by short message service (SMS) and/or voice messages when necessary for specific occasions, such as, for instance, when his account credit is low or when a GPRS Packet Data Protocol (PDP) context activation is rejected due to a lack of credit.

Different charging policies are foreseen depending on the destination, with for instance a free of charge policy and access charging policies. Access charging policies take account of different charging parameters in relation with GPRS data connections such as fixed access rates, transferred data volumes, elapsed connection times, times of the day, qualities of service and so on.

The control of GPRS sessions is ensured by a service control point 12. A bearer level system 15 contains a GPRS service switched function (SSF) handling GPRS detection points and it interfaces the service control point 12, in conditions defined above, i. e. by means of a CAP interface.

Unit 9, which is a HSS, stores CAMEL subscription information (CSI) for every GPRS subscriber having required a prepaid service.

The service control point 12 manages the GPRS user profile data, user account and the access point i.e. service switching point 16 providing and charging the data transferred in relation with the service to the user.

The service switching point 16 informs the service control point 12 of any attempt to establish a mobile service (MS) session or a policy decision point context, as indicated by the GPRS detection points, and the said service control point 12 supervises the sessions and connections.

The service switching point 16 can also provide a real time charging function and monitors the amounts of credit, for instance in time and/or volume, at the level of mobile service sessions and/or policy decision point contexts.

Transfers of charging information between a service control point 12 and a service switching point 16 are made according to the standardized bearer network interface CAP as already indicated above.

As it is described above, interaction with the service platform 14 for on-line charging reasons is required not only for the bearer level system 15 e.g. prepaid charging on the amount of transferred data, but is also required for the call control level e.g. prepaid charging on the type of call e.g. international or local call, with the PSTN or with the IP Multimedia domain. This call control level is implemented by means of a Session Initiation Protocol SIP call control element i.e. a proxy Call State Control Function device such as 17. This proxy call state control function device generates information related to services.

The bearer level system 15 uses for on-line charging the CAMEL Application Part CAP protocol in order to interface with the service platform 12.

A straightforward solution to enable the second level of interaction between the service platform 14 and the proxy call state control function device 17, is to standardize another on-line charging protocol between the proxy call state control function device 17 and the service platform 14 e.g. defining an Open Service Architecture interface. However, this would require standardization of two separate interfaces towards the service platform 14 in order to support the on-line charging.

The present invention removes the need to develop and to standardize this second on-line charging interface between the proxy call state control function device 17 and the service platform 14 by using the existing CAP interface between the service platform 14 and the bearer level system 15 for on line charging upon as well the bearer level as the call control level.

Indeed, by extending the policing architecture with charging functionality and by combining it with the already existing on-line charging mechanisms i.e. CAMEL for GPRS, an optimization of the architecture is reached.

This is realized by transferring call control level charging information, also called type information, from the proxy call state control function device 17 to the bearer level system 15. This type information is translated towards the service switching point 16 in order to be further transferred via the CAP interface towards the service platform 14.

In this way a type information receiving element such as 10 of Figure 2 is comprised in the bearer level system 15 in order to receive the type information provided by the proxy call state control function device 17. This type information-receiving element provides the type information via a translator such as 11 towards the service switching point 16. The translator 11 translates the received type information into type information understandable by the service switching point 16 and integrates it towards the standardized bearer network interface i.e. CAP interface. The translator 11 provides in fact an interface between the installed protocol used by the proxy call state control function device 17 and the used bearer network protocol.

It has to be remarked that the translator 11 can be implemented according to a stand-alone functionality, as shown in Figure 2, but can as well be implemented in a distributed way. The latter implementation means that the type information-receiving element 10 comprises a first part of the translator and the service switching point comprises a second part of the translator in order to realize the translation function.

In the same way, the service control point 12, included in a CSE service platform 14 with an application server 13, comprises corresponding receiving and transmitting means to receive information and particularly type information related to services from a service switching point 16.

According to another form of realization, the bearer level system 15, including a serving switching point 16, the translator 11 and the type information receiving element 10, according to the present invention, communicates with the proxy call state control function 17 in a general packet radio system by means of a common policy server protocol (COPS). Such a Common Open Policy Server Protocol is a protocol that is standardized by IETF. The COPS protocol supports the transfer of policy information and particularly charging information between a policy enforcement point and a remote policy decision point within the context of a particular type of client, i. e. user. In the event of an implementation of such a COPS protocol, the policy decision point PDP is connected to the proxy call state control function device 17 and the policy enforcement point PEP is comprised in the bearer level system 15 and more particular into the type information receiving element 10. In this way, the translator 11 provides a translation of the type information according to the COPS protocol towards type for being used by the service switching point 16 and being understandable for the CAP protocol.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A charging arrangement for a multimedia communication system including a bearer level network system (15) with at least a service switching point (16) and a service platform (14) with at least a service control point (12) and means for transferring information, between said service control point (12) and said service switching point (16) according to a standardized bearer network interface (CAP), and particularly charging information related to a transfer of data in relation with a service provided to a user, **characterized in that** :
- said bearer level system (15) comprises means for receiving (10) type information related to said service from a proxy call state control function device (17) and means for translating (11) said type information towards said service switching point (16) for transfer to said service control point (12) according to said standardized bearer network interface (CAP),
- said service control point (12) comprises means for requesting and means for receiving said type information, from said service switching point (16) according to said standardized bearer network interface (CAP).

2. A charging arrangement, according to claim 1, **characterized in that** said bearer level system (15) comprises any one of a serving general packet radio system support node and a gateway general packet radio system support node.

3. A charging arrangement, according to claim 1, **characterized in that** said means for receiving (10) type information is enabled to communicate with said proxy call state control function device (17) by means of a common open policy server interface (COPS).

4. A service switching point (16) for use in charging arrangement for a multimedia communication system including a bearer level network system (15) with at least said service switching point (16) and a service platform (14) with at least a service control point (12) and means for transferring information, between said service control point (12) and said service switching point (16) according to a standardized bearer network interface (CAP), and particularly charging information related to a transfer of data in relation with a service provided to a user, **characterized that** said service switching point (16) is enabled to receive translated type information from a means for receiving (10) type information of said bearer level system (15), via a means, of said bearer level system (15), for translating (11) said type information towards said service switching point (16), and that said service switching point (16) is enabled to transfer said type information to said service control point (12) according to said standardized bearer network interface (CAP), said type information being received by said means for receiving (10) type information from a proxy call state control function device (17) related to said service.

5. A service control point (12) of a service platform (14) in a multimedia communication system including said service platform (14) and a bearer level system (15) with at least a service switching point (16) and means for transferring information, between said service control point (12) and said service switching point (16) according to a standardised bearer network interface (CAP), and particularly charging information related to a transfer of data in relation with a service provided to an user, said service control point (12) being **characterized in that** it comprises means for requesting and means for receiving information related to said service, such as type information, from said service switching point (16) according to said standardized bearer network interface (CAP).

6. A bearer level system (15) **characterized in that** said bearer level system is a bearer level system for use in a charging arrangement according to claim 1.

7. A charging method for use in a multimedia communication system including a bearer level network system (15) with at least a service switching point (16) and a service platform (14) with at least a service control point (12), said method comprises a step of transferring information, between said service control point (12) and said service switching point (16) according to a standardized bearer network interface (CAP), and particularly charging information related to a transfer of data in relation with a service provided to a user, **characterized in that** said method further comprises the steps of
- receiving type information by said bearer level system (15) from a proxy call state control function device (17) related to said service; and
- translating said type information towards said service switching point (16) for transfer to said service control point (12) according to said standardized bearer network interface (CAP); and
- requesting and receiving said type information by said service control point (12), from said service switching point (16) according to said standardized bearer network interface (CAP).
